# EUROPEAN PATENT SPECIFICATION

(11) **EP 3 218 078 B1**
(45) Date of publication and mention of the grant of the patent: **11.01.2023**
(21) Application number: 15822988.0
(22) Date of filing: 10.11.2015
(51) Int. Cl.: B01D 9/00, C01G 53/00

(54) **PROCESS FOR THE PREPARATION OF PARTICLES**
VERFAHREN ZUR HERSTELLUNG VON PARTIKELN
PROCÉDÉ DE PRÉPARATION DE PARTICULES

(30) Priority: 13.11.2014 US 201462079283 P
(43) Date of publication of application: 20.09.2017
(73) Proprietor: BASF SE, 67056 Ludwigshafen am Rhein (DE)
(72) Inventor: SCHROEDLE, Simon, 67059 Ludwigshafen (DE); MUELLER, Patric, Beachwood, OH 44122 (US)
(74) Representative: BASF IP Association
(86) International application number: PCT/IB2015/002221
(87) International publication number: WO 2016/075533

(56) References cited:
- WO-A1-2011/136036
- US-A1- 2005 258 103

## Description

The invention is aimed at a process for the preparation of particles, for example dense spherical or spheroidal particles. The invention is also aimed at an apparatus for preparing the particles.

Free-flowing, dense particles are of high importance for the chemical and pharmaceutical industry. In WO 2011/136036 and FR 2 457 116, processes are disclosed in which solid particles are made be a continuous precipitation reaction.

Accordingly, disclosed is a process for the preparation of solid particles, which process comprises
providing a solids suspension in a vessel with stirring,
directing the suspension to a separation device, which device separates the suspension into a high solids stream and a low solids stream,
subjecting the high solids stream to high shear conditions in a high shear compartment and
circulating both streams back to the vessel,
where the solids suspension is continuously circulated through an integrated apparatus.

Also disclosed is an integrated apparatus suitable for the preparation of solid particles, the apparatus comprising
a vessel equipped with a stirring mechanism,
a separation device capable of separating a solids suspension into a high solids stream and a low solids stream and
a compartment capable of subjecting the high solids stream to high shear conditions, where
the separation device is connected to the vessel via a first feed line, the compartment is in-line in a second feed line connecting the separation device and the vessel and the separation device and the vessel are connected via a third feed line,
where the first, second and third feed lines are capable of continuously circulating the solids suspension from the vessel to the separation device, circulating the high solids stream from the separation device through the compartment to the vessel and circulating the low solids stream from the separation device to the vessel, respectively and
where the apparatus is capable of continuously circulating a solids suspension.

### Detailed Disclosure

The solids suspension is a suspension of organic, inorganic or organometallic compound particles (solids) in a solvent. The solvent may be water, organic solvent or a water/organic solvent mixture. The suspension may be prepared by simply mixing an organic, inorganic or organometallic compound in a solvent in which it is insoluble or only sparingly soluble. Alternatively, the suspension may be prepared by cooling of a solution, by adding a second solvent to a solution where the compound is insoluble or only sparingly soluble in the second solvent or by chemical reaction (precipitation reaction) where the desired particle products are insoluble or only sparingly soluble and any byproducts are soluble.

Suitable particles include pigments, organic compounds and metal-containing compounds.

The solvent is also termed the "mother liquor". The solvent or mother liquor may also contain dissolved salts or other dissolved compounds.

For example, the present process is highly suitable for the preparation of metal hydroxide compounds. The metal hydroxides are useful as precursors to prepare lithium compounds for use in cathodes of lithium ion batteries. For instance, particles efficiently prepared with the present process include mixed metal hydroxides comprising nickel and one or more elements selected from the group consisting of Fe, Co, Zn, Cu, Mn, Al, Cr, B, Mg, Ca, Sr, Ba and Si.

Metal hydroxide suspensions may be prepared as disclosed for instance in U.S. Pub. Nos. 2003/0054252, 2011/0180748 or 2011/0300470. Typically, the nickel-containing metal hydroxides are prepared by a precipitation reaction by combining aqueous solutions of NaOH and metal sulfate in the presence of ammonia. The insoluble metal hydroxide precipitates and the soluble sodium sulfate remains in the mother liquor.

Alternatively, sodium carbonate or other salts may be employed in place of or partially in place of sodium hydroxide. "Other salts" include alkali salts of oxalic acid, for instance potassium oxalate.

Metal hydroxide precursors prepared via the present process advantageously have small particle size and high density. Such metal hydroxides are useful in preparing high-performance cathode material.

The metal hydroxide precursors prepared with the present method are for instance in the form of secondary particles with a spherical or spheroidal shape. The secondary particles are assemblies of primary particles. The primary particles may have one or multiple crystalline structures and may have a homogeneous chemical composition or have a distribution of varied chemical compositions.

In the present process, a suspension or solutions to provide the suspension may be added to the vessel at once, in stages or continuously.

The shape of the vessel (reaction vessel) is not limited. The vessel may have a cylindrical shape or a parallelepiped shape and may have a flat or curved or conically shaped floor.

The vessel is equipped with an overflow or other type of level regulation device, for instance a level regulator and switched valve, to keep the liquid level in the vessel essentially constant during the process.

The vessel is equipped with a stirring mechanism. The stirrer may be a disc stirrer, propeller stirrer, inclined blade stirrer, INTERMIG stirrer or other type of stirrer. Stirring conditions (hydrodynamics) are important towards determining the properties of the product particles.

For instance, the vessel is a stirred tank reaction vessel.

The separation device is for instance selected from the group consisting of hydrocyclones, sedimentation devices, inclined plate separators, filtration units and combinations thereof. In particular, the separation of the suspension into a high solids stream and a low solids stream is performed purely with hydrodynamics, for instance with a hydrocyclone.

The separation device is connected to the vessel via a first feed line.

The high solids stream is a suspension with greater solids by weight per volume relative to the low solids stream suspension. For instance, the weight/volume : weight/volume ratio of the solids in the high solids stream to the solids of the low solids stream is from about 2/1 to about 100/1, from about 5/1 to about 80/1, from about 10/1 to about 70/1, from about 20/1 to about 60/1 or from about 30/1 to about 60/1. Alternatively, the low solids stream may contain essentially no solids.

For example, in a present process the high solids stream may have a solids content of from about 100 g/L to about 1000 g/L, from about 200 g/L to about 800 g/L or from about 300 g/L to about 700 g/L. For example, the high solids stream may have a solids content of about 400 g/L, about 500 g/L, about 600 g/L or about 900 g/L and levels in-between.

The low solids stream may have a solids content of from 0 to about 50 g/L, from about 2 g/L to about 40 g/L or from about 5 g/L to about 30 g/L. For instance, the low solids stream may have a solids content of about 7 g/L, about 10 g/L, about 13 g/L, about 16 g/L, about 19 g/L, about 22 g/L, about 25 g/L or about 28 g/L and levels in-between.

Solids content is weight of solids per volume of suspension.

The solids content of the solids suspension equals the solids content of the high solids stream plus the solids content of the low solids stream.

The high solids stream is directed from the separation device to a compartment within which it is subjected to high shear conditions. The compartment is in-line in a second feed line that connects the separation device and the vessel.

The high shear is applied with a mixer, nozzle or other suitable device, for example an in-line rotary high shear mixer. The thus treated high solids stream is directed back to the vessel.

Concurrently, the low solids stream is directed from the separation device back to the vessel via a third feed line.

The process is performed on a continuous basis, with the solids suspension being continuously circulated throughout the apparatus. The overall solids content and the liquid level in the vessel are kept essentially constant throughout the process.

The suspension is directed to the separation device, the high solids stream is directed from the separation device back to the vessel after high shear treatment and the low solids stream is directed from the separation device back to the vessel, via first, second and third feed lines respectively.

The apparatus is "integrated", meaning it is designed so that the liquid suspension continuously flows from the reaction vessel through the separation device via the first feed line and back to the vessel through the second and third feed lines. The high shear compartment is in-line in the second feed line.

The integrated apparatus comprises a vessel equipped with a stirring mechanism, at least one circulation pump, a separation device capable of separating a solids suspension into a high solids stream and a low solids stream, a compartment within which the high solids stream is subjected to high shear conditions and first, second and third feed lines, connecting the vessel and the separation device, the separation device and the vessel through the compartment and the separation device and the vessel, respectively.

Advantageously, the apparatus contains at least one flow balancing valve.

The apparatus contains at least one pump to circulate the solids suspension and streams throughout the apparatus.

The separation device will in general be associated with a drop in pressure, thus necessitating the presence of at least one circulation pump.

The pump may be present in-line in the first feed line. Alternatively, a pump may be present at one or both outlets of the separation device in-line in the second and third feed lines, with or without a pump at the inlet of the separation device.

In one embodiment, the integrated apparatus has one pump which is in-line in the first feed line and a flow balancing valve in-line in each of the second and third feed lines. The flow balancing valves allow adjustment of the flow rate of the high solids stream and the low solids stream.

The integrated apparatus may advantageously contain one or more flow measurement devices. Flow measurement devices are for instance selected from Coriolis effect based flowmeters, thermal effect based flowmeters, induction based flow meters and other flowmeters. The flowmeter(s) may be linked to the pump(s) and/or flow balancing valve(s) to set the flow rates of the suspension and the streams.

The final product may be collected by various methods. For instance, the product is collected from the vessel, either via overflow or another type of level regulation device.

Alternatively, the product may be collected from the high solids stream. To achieve an essentially constant solids content in the vessel during the process, a liquid stream of lower solids may be removed, for instance from the low solids stream or from the vessel. For instance, excess mother liquor may be removed via an inverse filtration device or similar device.

Advantageously, the process is performed in full continuous mode, with solids content and liquid level kept essentially constant over time. Product is advantageously continuously removed. For example, if product is removed via a timed level control valve, this is considered "continuously removed" although the valve will be switched on and off.

At the same time, feed solutions of reactants may be continuously added to the stirred vessel.

The integrated apparatus may contain one or more sampling ports or in-line particle size measuring devices. Typically, sampling ports are located in the vessel. In the present apparatus, sampling ports or in-line particle size measuring devices may be located in each of the vessel, high solids stream and low solids stream.

The integrated apparatus may further contain a device to remove liquid essentially free of solids (less than 10 g/L). Such a device may be selected from inclined plate separators, centrifuges, inverse filtration devices and other apparatuses that utilize sedimentation or filtration effects to yield adequate separation of solid and liquid phases. Liquid virtually free of solids may be removed continuously or periodically. Continuous removal is preferred.

Gas entrained in the loop may have an adverse effect on the action of the separation device and/or other devices of the integrated apparatus. The apparatus may further contain one or more gas separation devices within one or more of the lines or as part of one or more of the other devices mentioned herein. Recovered gas may preferably be fed to the head space of the vessel.

The integrated apparatus may utilize a vessel that is virtually free of head space.

An in-line particle size measuring device may be located at the outlet of the vessel or in a separate circulation loop attached to the vessel. Alternatively, small amounts of suspension may be continuously or intermittently removed from the vessel, diluted with a separate stream of solvent and fed to an in-line particle size measuring device.

The process may typically be performed continuously for weeks or months without interruption. Particle size will remain constant over this time - the apparatus may be run in a fully steady state. The "reaction time" is measured as the "time necessary to replace one full reaction volume". For example, if the full operation volume is replaced by feed solutions over an 8 hour period, the reaction time is 8 hours.

Typically, reaction times will range from about 0.3 to about 13 hours, from about 3 to about 9 hours or from about 1 to about 4 hours.

The product may typically be collected after about 2 to about 4 reaction times, for example after about 2, 3 or 4 reaction times.

In another embodiment, the product is collected from the beginning, segregated and mixed with a suspension of later production. Preferably, start-up product is not separately processed because it is difficult to handle/filter, but it is mixed with regular material from stable production.

In another embodiment, no product is taken during the first few reaction times, rather only mother liquor is removed. This will result in an increasing solids content (g of solids per L of suspension) during the start-up phase. Once a certain solids level, say, from about 100 g/L to about 200 g/L is reached, collection of product may begin. Advantage of such a process is start-up with no waste and no segregation.

While not mandatory, typically the pump is started from the beginning, in order to thermostat and prime the system. This also allows one to check for proper functioning. Further, the pump loop, or part of it, might be used as a heat exchanger and is therefore needed to run the reaction at constant temperature.

The pump and/or other devices in the integrated apparatus may generate heat via dissipation of mechanical energy. Such heat may be important for keeping the reaction mixture at constant temperature.

The process is advantageously performed at high liquid circulation flow rate throughout the integrated system, for instance from about 6000 L/h to about 10000 L/h or from about 7000 L/h to about 9000 L/h, for instance about 8000 L/h. A 10 L liquid volume at a liquid circulation flow rate of 8000 L/h results in a time of 4.5 seconds for the entire volume to make one complete cycle in the system. Such examples are appropriate for example for a 50 L apparatus.

The completion of one cycle is "cycle time".

The time required for the entire liquid volume to complete one full cycle in the apparatus is for example from about 1 second to about 30 seconds, from about 1 second to about 25 seconds or from about 2 seconds to about 20 seconds. For instance, the time required for the entire volume to make one complete cycle is about 3, about 4, about 5, about 6, about 7, about 8, about 9, about 10, about 11, about 12, about 13, about 14, about 15, about 16, about 17, about 18 or about 19 seconds.

The low solids stream liquid flow rate via the third feed line may comprise a majority of the overall liquid flow rate in the apparatus, for instance from about 60% to about 95%, from about 70% to about 90% or about 80% of the liquid flow rate.

The high solids stream liquid flow rate via the second feed line may comprise a minority of the overall liquid flow rate in the system, for instance from about 5% to about 40%, from about 10% to about 30% or about 20% of the liquid flow rate.

At least a certain fraction of the total mechanical energy dissipated in the liquid suspension is dissipated in the high solids stream.

Advantageously, ≥ 10% of the total mechanical energy dissipated in the liquid is dissipated in the high solids stream under the high shear conditions, for instance ≥ 20%, ≥ 30%, ≥ 40% or ≥ 50% of the total mechanical energy is dissipated under the high shear conditions. For instance, in one example about 80% of the total mechanical energy is dissipated in the liquid suspension in the stirred vessel and about 20% is dissipated in the liquid in the high shear compartment under high shear conditions.

In general, the process is performed at atmospheric pressure.

Mechanical energy "dissipated" is mechanical energy transferred by a device to the liquid suspension per time.

Specific power density in the vessel is for instance from about 1 W/L to about 40 W/L, for instance from about 1 W/L to about 30 W/L or from about 2 W/L to about 20 W/L.

Specific power density in the high shear compartment is for instance ≥ 100 W/L, ≥ 200 W/L, ≥ 300 W/L, ≥ 400 W/L or ≥ 500 W/L.

The vessel, high shear compartment or the entire integrated apparatus may be kept at an appropriate temperature with a cooling or heating mechanism. For instance, for a precipitation reaction to prepare metal hydroxide particles, the vessel, compartment or the entire apparatus is advantageously held at a temperature of from about 25°C to about 95°C or from about 40°C to about 70°C. Different elements of the apparatus may be held at different temperatures. The suspension, high solids stream and low solids stream may each be at an identical temperature or at different temperatures.

For a precipitation reaction employing hydroxide salts, the contents of the vessel may be kept at a temperature of from about 35°C to about 65°C. For a reaction employing carbonate salts, the contents of the vessel may be kept at a temperature of from about 45°C to about 60°C.

In general, the present integrated apparatus (except the vessel) is filled with liquid and at a positive pressure relative to the atmosphere and thus, the solids suspension and streams are not in contact with air. The contents of the vessel may be blanketed with an inert gas such as nitrogen or argon if desired.

Particles prepared via the present process and apparatus exhibit reduced primary particle size, high density secondary particles with higher density in the center of the particles, a smooth secondary particle surface and an asymmetric secondary particle size distribution which is broadened towards the smaller sizes. The secondary particles are essentially free of fines, i.e. particles smaller than 1 micron and are essentially free of large particles, i.e. particles larger than 50 microns. In particular, present secondary particles are essentially free of particles larger than 32 microns.

The tap density of the particle product may be tailored according to the desired application. For instance, high density secondary particles with a particle size of about 10 microns may be prepared. Alternatively, particles of a lower tap density with a secondary particle size of about 5 microns and high sphericity may be prepared.

For instance, present secondary particles are spherical or spheroidal with an average particle size of from about 1 micron to about 50 microns, from about 2 microns to about 40 microns, from about 2 microns to about 35 microns or from about 2 microns to about 32 microns.

Particle size is defined as D50 particle size, measured via light scattering. Suitable devices include industry standard particle size analyzers such as Malvern MASTERSIZER 2000 or 3000.

The terms "a" or "an" referring to elements of an embodiment may mean "one" or may mean "one or more".

The terms "essentially", "substantially" and "about" used throughout this specification are used to describe and account for small fluctuations. For example, they can refer to less than or equal to ±5%, such as less than or equal to ±2%, less than or equal to ±1 %, less than or equal to ±0.5%, less than or equal to ±0.2%, less than or equal to ±0.1% or less than or equal to ±0.05%. All numeric values herein are modified by the term "about," whether or not explicitly indicated. A value modified by the term "about" of course includes the specific value. For instance, "about 5.0" must include 5.0.

All measurements herein are performed at ambient conditions, 25°C and 1 atm of pressure, unless otherwise indicated.

### Brief Description of the Drawings

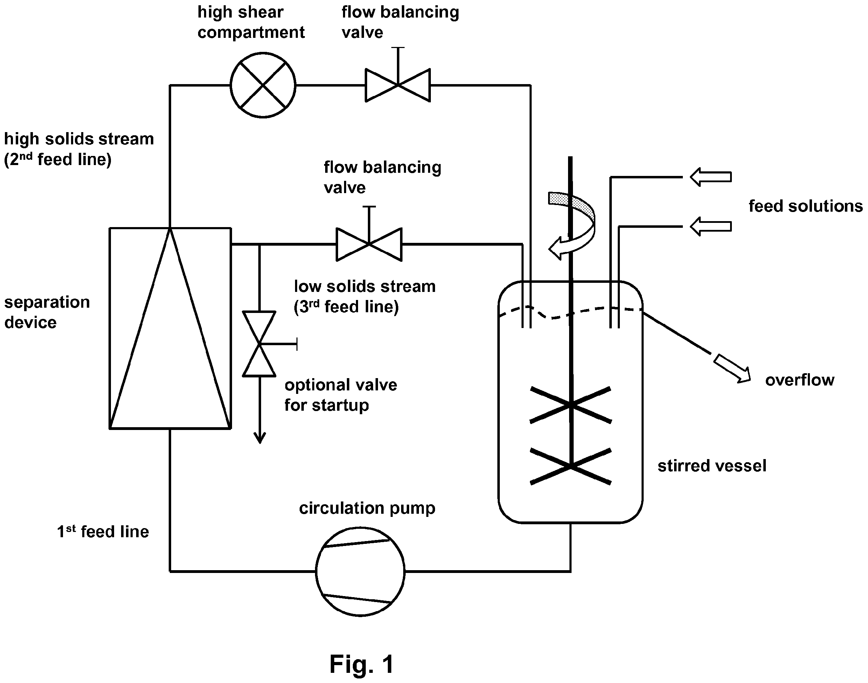

Fig. 1 depicts a present integrated apparatus. The solids suspension of the vessel and high and low solids streams are continuously circulated via a circulation pump. The circulation pump is in-line in a 1^{st} feed line transferring the solids suspension from the vessel to the separation device. The high solids stream is subjected to high shear in the high shear compartment which is in line in the 2^{nd} feed line and is transferred from the separation device back to the vessel. The low solids stream is transferred via a 3^{rd} feed line from the separation device back to the vessel. Flow balancing valves in-line in the 2^{nd} and 3^{rd} feed lines allow for adjustment of flow rates. The apparatus is operated continuously at a steady state. Reactants are continuously added via feed solution lines and product is continuously removed via vessel overflow. Optionally, the apparatus contains an outlet for removal of low solids stream during start-up.

Following disclosed are some embodiments of the invention.
**E1.** A process for the preparation of solid particles, which process comprises
   providing a solids suspension in a vessel with stirring,
   directing the suspension to a separation device, which device separates the suspension into a high solids stream and a low solids stream,
   subjecting the high solids stream to high shear conditions in a high shear compartment and
   circulating both streams back to the vessel,
   where the solids suspension is circulated continuously through an integrated apparatus.
**E2.** A process according to embodiment **1** where the suspension is a suspension of solids in water, organic solvent or an organic solvent/water mixture, for instance water.
**E3.** A process according to embodiments **1** or **2** where the particles are spherical or spheroidal secondary particles.
**E4.** A process according to any of the preceding embodiments where the particles comprise organic, inorganic or organometallic compounds.
**E5.** A process according to any of the preceding embodiments where the solids suspension is provided by a method comprising a precipitation reaction.
**E6.** A process according to any of the preceding embodiments where the particles comprise metal hydroxides, for instance a mixed metal hydroxide comprising nickel and one or more elements selected from the group consisting of Fe, Co, Zn, Cu, Mn, Al, Cr, B, Mg, Ca, Sr, Ba and Si.
**E7.** A process according to any of the preceding embodiments where the particles are essentially free of particles with a particle size of less than 1 micron and essentially free of particles with a particle size of greater than 50 microns or essentially free of particles with a particle size of greater than 32 microns.
**E8.** A process according to any of the preceding embodiments where the vessel is equipped with an overflow or other device capable of maintaining an essentially constant liquid level therein during circulation of the solids suspension.
**E9.** A process according to any of the preceding embodiments where the separation is performed via one or more devices selected from the group consisting of a hydrocyclone, a sedimentation device, an inclined plate separator and a filtration unit or where the separation is performed solely via hydrodynamics, for instance where the separation device is a hydrocyclone.
**E10.** A process according to any of the preceding embodiments where the weight/volume : weight/volume ratio of the solids in the high solids stream to the solids of the low solids stream is from about 2/1 to about 100/1, from about 5/1 to about 80/1, from about 10/1 to about 70/1, from about 20/1 to about 60/1 or from about 30/1 to about 60/1.
**E11.** A process according to any of embodiments **1-9** where the low solids stream contains essentially no solids.
**E12.** A process according to any of the preceding embodiments where the high solids stream has a solids content of from about 100 g/L to about 1000 g/L, from about 200 g/L to about 800 g/L or from about 300 g/L to about 700 g/L.
**E13.** A process according to any of the preceding embodiments where the low solids stream has a solids content of from 0 to about 50 g/L, from about 2 g/L to about 40 g/L or from about 5 g/L to about 30 g/L.
**E14.** A process according to any of the preceding embodiments where the high shear conditions are applied with a mixer, nozzle or other device, for instance an in-line rotary high shear mixer.
**E15.** A process according to any of the preceding embodiments where the time required for the entire liquid volume to complete one cycle in the apparatus is from about 1 second to about 30 seconds, from about 1 second to about 25 seconds or from about 2 seconds to about 20 seconds.
**E16.** A process according to any of the preceding embodiments where the total liquid flow rate in the apparatus is from about 6000 L/h to about 10000 L/h or from about 7000 L/h to about 9000 L/h.
**E17.** A process according to any of the preceding embodiments where the low solids stream liquid flow rate comprises from about 60% to about 95% or from about 70% to about 90% of the total liquid flow rate in the apparatus and the high solids stream liquid flow rate comprises from about 5% to about 40% or from about 10% to about 30% of the total liquid flow rate in the apparatus.
**E18.** A process according to any of the preceding embodiments where ≥ 10%, ≥ 20%, ≥ 30%, ≥ 40% or ≥ 50% of the total mechanical energy dissipated in the liquid is dissipated under the high shear conditions.
**E19.** A process according to any of the preceding embodiments where the specific power density in the vessel is from about 1 W/L to about 40 W/L, from 1 W/L to about 30 W/L or from about 2 W/L to about 20 W/L.
**E20.** A process according to any of the preceding embodiments where the specific power density in the high shear compartment is ≥ 100 W/L, ≥ 200 W/L, ≥ 300 W/L, ≥ 400 W/L or ≥ 500 W/L.
**E23.** An apparatus according to embodiments **21** or **22** where the separation device is selected from the group consisting of a hydrocyclone, a sedimentation device, an inclined plate separator and a filtration unit, for instance where the separation device is a hydrocyclone.
**E24.** An apparatus according to any of embodiments **21-23** where the compartment comprises a mixer, nozzle or other device, for instance an in-line rotary high shear mixer.
**E25.** An apparatus according to any of embodiments **21-24** where when circulating the solids suspension, the time required for an entire liquid volume to complete one cycle in the apparatus is from about 1 second to about 30 seconds, from about 1 second to about 25 seconds or from about 2 seconds to about 20 seconds.
**E26.** An apparatus according to any of embodiments **21-25** where the total liquid flow rate during circulation of the solids suspension in the apparatus is from about 6000 L/h to about 10000 L/h or from about 7000 L/h to about 9000 L/h.
**E27.** An apparatus according to any of embodiments **21-26** where the low solids stream liquid flow rate during circulation of the solids suspension comprises from about 60% to about 95% or from about 70% to about 90% of the total liquid flow rate in the apparatus and the high solids stream liquid flow rate comprises from about 5% to about 40% or from about 10% to about 30% of the total liquid flow rate in the apparatus.
**E28.** An apparatus according to any of embodiments **21-27** where during circulation of the solids suspension, ≥ 10%, ≥ 20%, ≥ 30%, ≥ 40% or ≥ 50% of the total mechanical energy dissipated in the liquid is dissipated under the high shear conditions.
**E29.** An apparatus according to any of embodiments **21-28** where the specific power density in the vessel is from about 1 W/L to about 40 W/L, from 1 W/L to about 30 W/L or from about 2 W/L to about 20 W/L.
**E30.** An apparatus according to any of embodiments **21-29** where the specific power density in the high shear compartment is ≥ 100 W/L, ≥ 200 W/L, ≥ 300 W/L, ≥ 400 W/L or ≥ 500 W/L.

### Example 1

A 50 L reaction vessel is filled with 40 L of an aqueous solution containing 28 g of ammonium sulfate per kg of solution. The circulation pump is operated to achieve a liquid flow rate of 8000 L/h throughout the system. The temperature of the entire apparatus is set to 50°C by means of a heat exchanger and sufficient NaOH is added, as a 25 wt% (weight %) aqueous solution to adjust the pH to 11.8.

A mixed aqueous solution of Ni, Co and Mn sulfate (0.55 mol of each per kg of mixed solution), is introduced to the reactor at a rate of 3.06 kg per hour. Simultaneously, a mixed solution of 5.58 mol/(kg mixed solution) NaOH and 1.57 mol/(kg mixed solution) NH₃ is metered in at an initial rate of 1.69 kg per hour. The flow rate of the NaOH is adjusted by a pH regulation circuit in order to keep the pH at a constant value of 11.8.

The hydrocyclone is activated and splits the flow from the vessel via a first feed line into a high solids stream and a low solids stream. The suspension in the vessel ("the suspension") is 121 g/L solids. The high solids stream is 500 g/L solids. The low solids stream is from 0 to 10 g/L solids. The low solids stream is returned to the reaction vessel via a third feed line at a flow rate of 6400 L/h. The high solids stream is directed in a second feed line to an in-line rotary high shear mixer and the treated high solids stream is returned to the reaction vessel via the second feed line at a rate of 1600 L/h. The high shear mixer is operated at about 2.5 kW mechanical power dissipation and has an internal volume of about 1.5 L.

Throughout the process, the vessel stirring speed is set to provide about 450 W of mechanical power dissipation.

The apparatus is operated continuously keeping the liquid level in the reaction vessel essentially constant. Flow rates are adjusted by automatic control of the flow balancing valves. Continuous operation means the solids suspension is continuously cycled through the apparatus. Product is collected via free overflow from the vessel.

The total volume of the liquid contained in the apparatus (vessel, pipework, pumps, valves, separation device) is about 70 L.

## Claims

1. A process for the preparation of solid particles, which process comprises:
providing a solids suspension in a vessel with stirring that is part of an integrated apparatus further comprising a separation device and a high shear compartment,
directing the suspension to the separation device and separating the suspension into a high solids stream and a low solids stream,
subjecting the high solids stream to high shear conditions in said high shear compartment and
**characterized by** circulating both streams back to the vessel,
where the solids suspension is circulated continuously through the integrated apparatus, wherein the overall solids content and the liquid level in the vessel are kept essentially constant throughout the process, and wherein the product is collected from the vessel either via overflow or another type of level regulation device.

2. A process according to claim 1 where the suspension is a suspension of solids in water and where the solids suspension is provided by a method comprising a precipitation reaction.

3. A process according to claim 1 where the particles are spherical or spheroidal secondary particles and/or where the particles comprise inorganic compounds such as metal hydroxides; and where the particles are essentially free of particles with a particle size of less than 1 micron and essentially free of particles with a particle size of greater than 50 microns.

4. A process according to claim 1 where the vessel is equipped with an overflow or other device capable of maintaining an essentially constant liquid level therein during circulation of the solids suspension; where the separation is performed via one or more devices selected from the group consisting of a hydrocyclone, a sedimentation device, an inclined plate separator and a filtration unit and where the high shear conditions are applied with an in-line rotary high shear mixer.

5. A process according to claim 1 wherein the low solids stream contains from 0 to 50 g/L solids.

6. A process according to claim 5 where the high solids stream has a solids content of from about 100 g/L to about 1000 g/L.

7. A process according to any of claims 1 to 6 where the total liquid flow rate in the integrated apparatus is from about 6000 L/h to about 10000 L/h and/or where the low solids stream liquid flow rate comprises from about 60% to about 95% of the total liquid flow rate in the integrated apparatus and the high solids stream liquid flow rate comprises from about 5% to about 40% of the total liquid flow rate in said integrated apparatus.

8. A process according to any of claims 1 to 6 where the specific power density in the vessel is from about 1 W/L to about 40 W/L and/or where the specific power density in the high shear compartment is ≥ 100 W/L.

## Patentansprüche

1. Verfahren zur Herstellung von festen Partikeln, wobei das Verfahren umfasst:
Bereitstellen einer Feststoffsuspension in einem Rührgefäß, das Teil einer integrierten Anlage ist, die ferner eine Trennvorrichtung und eine Kammer für hohe Scherwirkung umfasst,
Leiten der Suspension zu der Trennvorrichtung und Auftrennen der Suspension in einen feststoffreichen Strom und einen feststoffarmen Strom,
Unterwerfen des feststoffreichen Stroms an Bedingungen mit hoher Scherwirkung in der Kammer für hohe Scherwirkung und
**gekennzeichnet durch** Zirkulieren beider Ströme zurück zu dem Gefäß,
wobei die Feststoffsuspension kontinuierlich durch die integrierte Anlage zirkuliert wird,
wobei der Gesamtfeststoffgehalt und der Flüssigkeitstand in dem Gefäß während des Verfahrens im Wesentlichen konstant gehalten werden und wobei das Produkt über Überlauf oder einen anderen Typ von Füllstandregelvorrichtung aus dem Gefäß gesammelt wird.

2. Verfahren gemäß Anspruch 1, wobei die Suspension eine Suspension von Feststoffen in Wasser ist und wobei die Feststoffsuspension durch ein Verfahren, das eine Präzipitationsreaktion umfasst, bereitgestellt wird.

3. Verfahren gemäß Anspruch 1, wobei die Partikel sphärische oder sphäroidale Sekundärpartikel sind und/oder wobei die Partikel anorganische Verbindungen, wie z.B. Metallhydroxide, umfassen;
und wobei die Partikel im Wesentlichen frei von Partikeln mit einer Partikelgröße von kleiner als 1 Mikrometer und im Wesentlichen frei von Partikeln mit einer Partikelgröße von größer als 50 Mikrometer sind.

4. Verfahren gemäß Anspruch 1, wobei das Gefäß mit einem Überlauf oder einer anderen Vorrichtung ausgestattet ist, die fähig ist, einen im Wesentlichen konstanten Flüssigkeitstand während der Zirkulation der Feststoffsuspension aufrechtzuhalten; wobei die Trennung über eine oder mehrere Vorrichtungen ausgewählt aus der Gruppe bestehend aus einem Hydrozyklon, einer Sedimentationsvorrichtung, einem Schrägplattenabscheider und einer Filtrationseinheit durchgeführt wird und wobei die Bedingungen mit hoher Scherwirkung mithilfe eines In-Line-Rotationsmischers mit hoher Scherwirkung angewendet werden.

5. Verfahren gemäß Anspruch 1, wobei der feststoffarme Strom von 0 bis 50 g/l Feststoffe enthält.

6. Verfahren gemäß Anspruch 5, wobei der feststoffreiche Strom einen Feststoffgehalt von etwa 100 g/l bis etwa 1000 g/l aufweist.

7. Verfahren gemäß einem der Ansprüche 1 bis 6, wobei die Gesamt-Flüssigkeitsdurchflussrate in der integrierten Anlage von etwa 6000 l/h bis etwa 10000 l/h beträgt und/oder wobei die Flüssigkeitsdurchflussrate des feststoffarmen Stroms von etwa 60 % bis etwa 95 % der Gesamt-Flüssigkeitsdurchflussrate in der integrierten Anlage umfasst und die Flüssigkeitsdurchflussrate des feststoffreichen Stroms von etwa 5 % bis etwa 40 % der Gesamt-Flüssigkeitsdurchflussrate in der integrierten Anlage umfasst.

8. Verfahren gemäß einem der Ansprüche 1 bis 6, wobei die spezifische Leistungsdichte in dem Gefäß von etwa 1 W/l bis etwa 40 W/l beträgt und/oder wobei die spezifische Leistungsdichte in der Kammer für hohe Scherwirkung ≥ 100 W/l beträgt.

## Revendications

1. Procédé pour la préparation de particules solides, lequel procédé comprend :
la fourniture d'une suspension de solides dans une cuve sous agitation qui fait partie d'un appareil intégré comprenant en outre un dispositif de séparation et un compartiment pour cisaillement élevé,
l'orientation de la suspension vers le dispositif de séparation et la séparation de la suspension en un flux à teneur élevée en solides et un flux à teneur faible en solides,
la soumission du flux à teneur élevée en solides à des conditions de cisaillement élevé dans ledit compartiment pour cisaillement élevé et **caractérisé par** la circulation des deux flux à nouveau vers la cuve,
dans lequel la suspension de solides est mise en circulation de manière continue à travers l'appareil intégré, la teneur globale en solides et le niveau de liquide dans la cuve étant maintenus essentiellement constants durant tout le procédé, et le produit étant collecté de la cuve soit par débordement, soit par un autre type de dispositif de régulation de niveau.

2. Procédé selon la revendication 1 dans lequel la suspension est une suspension de solides dans de l'eau et dans lequel la suspension de solides est fournie par un procédé comprenant une réaction de précipitation.

3. Procédé selon la revendication 1 dans lequel les particules sont des particules secondaires sphériques ou sphéroïdales et/ou dans lequel les particules comprennent des composés inorganiques tels que des hydroxydes métalliques ; et dans lequel les particules sont essentiellement exemptes de particules dotées d'une taille de particule inférieure à 1 micron et essentiellement exemptes de particules dotées d'une taille de particule supérieure à 50 microns.

4. Procédé selon la revendication 1 dans lequel la cuve est équipée d'un débordement ou d'un autre dispositif capable de maintenir un niveau de liquide essentiellement constant pendant la circulation de la suspension de solides ; dans lequel la séparation est réalisée avec un ou plusieurs dispositifs choisis dans le groupe constitué par un hydrocyclone, un dispositif de sédimentation, un séparateur à plaque inclinée et une unité de filtration et dans lequel les conditions de cisaillement élevé sont appliquées avec un mélangeur à cisaillement élevé rotatif en ligne.

5. Procédé selon la revendication 1, le flux à teneur faible en solides contenant de 0 à 50 g/L de solides.

6. Procédé selon la revendication 5 dans lequel le flux à teneur élevée en solides possède une teneur en solides allant d'environ 100 g/L à environ 1 000 g/L.

7. Procédé selon l'une quelconque des revendications 1 à 6 dans lequel le débit de liquide total dans l'appareil intégré est d'environ 6 000 L/h à environ 10 000 L/h et/ou dans lequel le débit de liquide de flux à teneur faible en solides représente d'environ 60 % à environ 95 % du débit de liquide total dans l'appareil intégré et le débit de liquide de flux à teneur élevée en solides représente d'environ 5 % à environ 40 % du débit de liquide total dans l'appareil intégré.

8. Procédé selon l'une quelconque des revendications 1 à 6 dans lequel la densité de puissance spécifique dans la cuve est d'environ 1 W/L à environ 40 W/L et/ou dans lequel la densité de puissance spécifique dans le compartiment pour cisaillement élevé est ≥ 100 W/L.
